# EUROPEAN PATENT APPLICATION

(11) **EP 0 652 409 A1**
(43) Date of publication of application: **10.05.1995**
(21) Application number: 94307148.0
(22) Date of filing: 29.09.1994
(51) Int. Cl.: F25D 16/00

(54) **A refrigeration apparatus**

(30) Priority: 08.11.1993 GB 9322933
(71) Applicant: The BOC Group plc, Windlesham Surrey GU20 6HJ (GB)
(72) Inventor: Hudson, Trevor Dane, Fleet, Hampshire, GU13 0RS (GB); Wilkinson, Melvin John, Warminster, Wiltshire, BA12 9QL (GB)
(74) Representative: Gough, Peter

(57) **Abstract**

An apparatus suitable for controlling the temperature of perishable products during transportation thereof comprising the combination of a smaller than usual mechanical refrigeration system 14 and a cryogenic system 16 together with a control system for operating one or the other or both systems so as to maintain the temperature within the container within a predetermined temperature range.

## Description

The present invention relates to a refrigeration apparatus and relates particularly, but not exclusively, to a transportable refrigeration apparatus.

Transportable refrigeration apparatus are generally used for maintaining the temperature of a perishable product within acceptable limits during transportation thereby to avoid spoilage and ensure the product reaches the customer in the best possible condition.

Presently known transportable refrigeration apparatus generally comprise cryogenic or mechanical refrigeration systems for supplying a cooling atmosphere to the interior of a container in which the perishable product is stored. In a cryogenic system, cryogenic fluid, such as for example liquid nitrogen, is sprayed over the perishable such that the liquid and/or vaporised nitrogen acts to cool the product. Mechanical systems work on the principle of heat exchange between the interior and exterior of the container. Liquid held in a closed loop refrigeration system is compressed by a mechanical compressor and then expanded within an evaporator positioned within the container to be cooled. Expansion of the liquid causes a temperature drop thereof and thus cold liquid is passed through the evaporator in which a heat exchange operation takes place such that the liquid refrigerant is heated and the atmosphere within the container is cooled. The heated liquid is cooled by passing it through a heat exchanger positioned outside of the container and exposed to the passage of cooling air.

The above mentioned refrigeration apparatus do suffer from a number of drawbacks which can result in them being unable to meet the requirements of some operators. Mechanical systems, for example, generally use a diesel compressor which when operated in confined spaces, such as loading bays, cause unacceptable noise and pollution. In addition to this, they provide a comparatively slow means of reducing the temperature within the container taking some three times longer than an equivalent cryogenic system. This can cause problems during loading, when it will be necessary to operate the mechanical system for a comparatively long period of time before loading can take place. Slow temperature recovery after the container has been opened is also a problem associated with such mechanical systems. Breakdowns are not unknown and this could result in the spoiling of a valuable cargo.

Cryogenic refrigeration systems, whilst being silent in operation, reliable and being able to provide a rapid reduction in container temperature (commonly referred to as rapid pull down) do not lend themselves to use on long trips as the liquid cryogen is consumed rapidly and is not easily replenished during the trip.

It is an object of the present invention to provide a refrigeration apparatus which reduces and possibly overcomes the problems associated with the above mentioned systems.

Accordingly, the present invention provides a refrigeration apparatus comprising a container for receiving items to be maintained under controlled temperature conditions and a temperature control means for generating and controlling said controlled temperature within the container, in which the temperature control means comprises the combination of a mechanical refrigeration device and a cryogenic refrigeration device together with a control system for controlling the operation of each device so as to cause the operation of one or other or both of said devices in accordance with predetermined operating parameters.

It will be appreciated by providing an integrated combination of cryogenic and mechanical refrigeration the advantages of each may be exploited whilst the disadvantages are avoided thereby to provide a system capable of meeting requirements which cannot be met by either system above.

In another aspect of the present invention there is provided a method of operating a refrigeration apparatus as described above comprising the following steps:
(a) operating the cryogenic refrigeration device so as to reduce rapidly the temperature within the container to or within a given range of a first temperature below that of atmospheric and at which it is desired to maintain a product to be placed in the container.
(b) operating the mechanical refrigeration device to maintain the temperature within the container at or within a given range of said first temperature;
(c) operating the cryogenic refrigeration device to initiate a rapid reduction in temperature within the container after the escape of atmosphere therefrom.
(d) repeating steps (b) and (c) as required so as to maintain the temperature within the container within a desired temperature range.

The present invention will now be more particularly described by way of example only with reference to the following drawings in which:

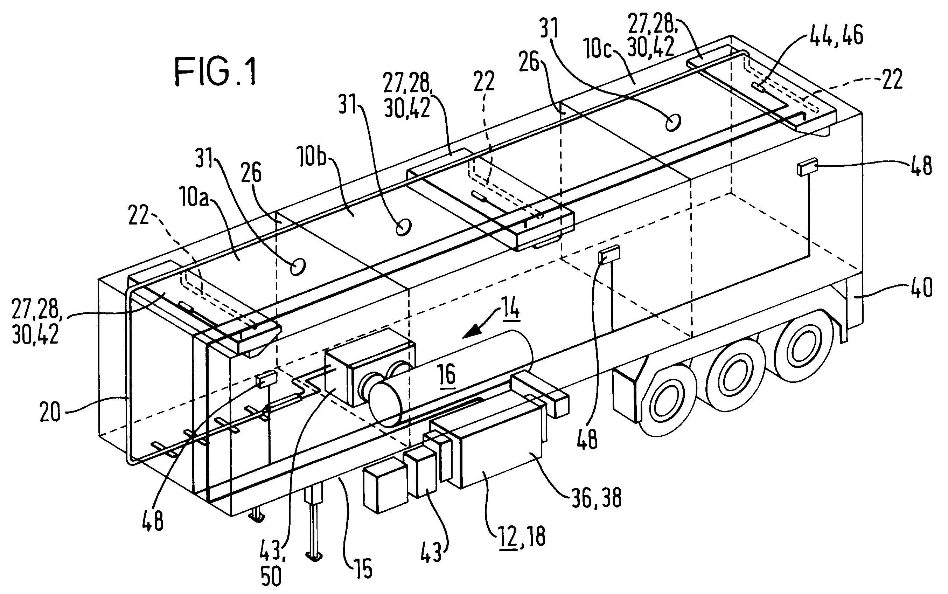

Figure 1 is a part cut away drawing of a road container incorporating features of the present invention and

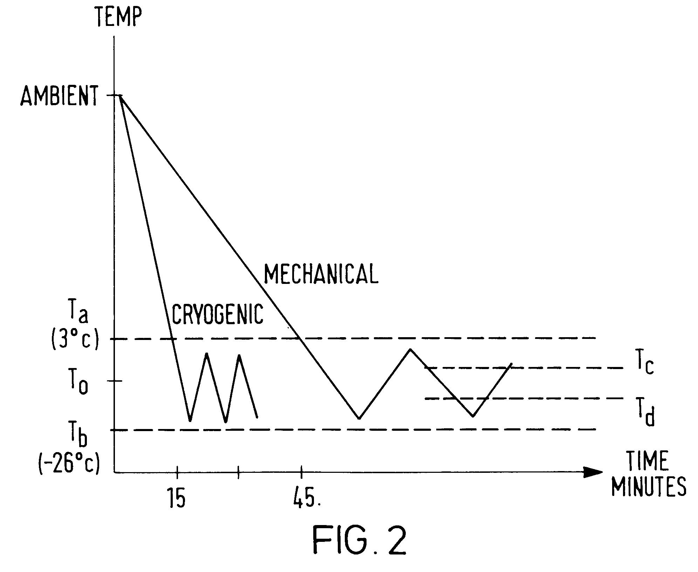

Figure 2 is a graph of container temperature against time.

Referring to the drawings, a container 10 for use in, for example, the transportation of perishable food product is provided with both a mechanical and a cryogenic refrigeration system, 12 and 14 respectively. For reasons which will be explained later, the mechanical system 12 is somewhat smaller than that which would be required in a conventional "mechanical only" refrigeration arrangement. The storage tank 16 of the cryogenic system and the compressor 18 of the mechanical system may each be conveniently positioned beneath the trailer 15 associated with the container. Alternative arrangements are however, possible without departing from the spirit of the present invention. The cryogenic tank is linked via pipeline 20 to a plurality of spraybars 22 situated under an evaporator 30 of a mechanical system described later herein. The container 10 may be divided into a number of compartments 10a, 10b, 10c by movable partitions 26 in which case at least one set of spray bars is provided per compartment. Further components of the mechanical system comprise at least one evaporator 28 per compartment each evaporator having an expander 30, and a heat exchanger 34 which may, for convenience, be mounted beneath the trailer 15 adjacent to the compressor. If more than one evaporator 28 is provided, they are preferably connected in parallel. A diesel motor 36 is provided for driving the mechanical compressor. The diesel motor 36 may be supplemented by an electric motor 38 if desired, thereby enabling the system to be operated comparatively quietly whenever a suitable supply of electricity is available. For convenience, an electrical connection point 40 is provided towards the rear of the trailer. Circulation fans 42 are provided in the evaporators 28 so as to assist with the circulation of cooled atmosphere around the container whilst vents 31 allow excess atmosphere to escape from the container. Each evaporator is also provided with a heater 27 for heating the interior of the container when creating a 'controlled atmosphere'. Exit and return pipes 21a, 21b are provided for the passage of cooling fluid to and from the evaporators 28.

A control system plus fill point 43 is provided for maintaining control over the operation of the two refrigeration systems and comprises a plurality of heat sensors 44, 46 such as, for example, duel standard unshielded Brandstedt TM probes at least one for returned air and at least one for cryogenic operation measurements. A thermostat 48 having a single calibration adjustment covering both probes 44, 46 at the same time is also provided in each compartment. The control system 43 is programmable with a plurality of temperature and time limits as will be described below.

A manual override 50 may be provided for avoiding the control system as and when desired and return operation of the mechanical and/or cryogenic refrigeration system to the vehicle operator. Such an arrangement would be desirable in the unlikely event of a system failure or during operation at extreme temperatures.

In operation, a refrigeration apparatus is required to undergo the following steps:
(a) rapid chilling of the container interior to a first operating temperature prior to the loading of any perishable (otherwise known as rapid pull down);
(b) maintenance of the first operating temperature after loading and during the journey to the customer;
(c) rapid recovery of the first operating temperature after the container doors have been opened at the delivery point.

In addition to the above, the container may be operated so as to create different temperature zones, one zone being created in each compartment 10a, 10b, 10c for example. When compartmental operation is adopted, it will be possible to create, for example, one zone maintained at what amounts to a 'frozen' state, one in a 'chilled' state and one at 'controlled ambient' temperature. The actual temperature that equates to frozen, chilled and ambient will vary depending upon the product concerned and the outside temperature. Hence, for the remainder of this description the terms are used fairly loosely and are therefore not considered to be limiting.

In operation, the present invention is used by adopting the following steps:
firstly, the cryogenic refrigeration system 14 is operated so as to reduce rapidly the temperature within the container 10 prior to the loading of perishable products. The cryogenic system having a rapid pull down capability and being silent is particularly well suited to use during rapid pull down which must be as quick as possible so as to facilitate speedy loading and as quiet as possible to avoid excessive noise which can be a particular problem during early morning operation. Once the cryogenic system 14 has lowered the temperature within the container to within a first given range (Tₐ-T_{b}) of a desired first operating temperature (Tₒ) at which it is desired to maintain any product, then loading of the container can commence;
Secondly, operating the somewhat noisy, but less endurance limited mechanical system, whilst the container is in transit to the customer thereby to maintain the contents of the container within the first range (Tₐ-T_{b}). At this stage, the cryogenic refrigeration system can be switched off or operated at a much reduced level in which case it will act to supplement the mechanical system;
Thirdly, operating the cryogenic refrigeration system after the doors of the container have been opened and a portion of the cooling atmosphere has escaped during product delivery, so as to initiate a rapid and/or a high capacity of temperature reduction to bring the contents of the container back into (or maintain it within) the first range (Tₐ-T_{b}). During this stage, the mechanical system may be turned off thereby avoiding excessive noise or it's operation may be continued (when noise is not a problem) such that it acts to supplement the cryogenic system.

The third step may be modified by ceasing operation of the cryogenic refrigeration system and operating the mechanical system once the temperature is within a given second range (T_{c}-T_{d}) of the first operating temperature Tₒ. The second range being closer to Tₒ than the first range.

The cryogenic refrigeration device may be turned off before or within a first pre-set time period (P₁) after commencement of operation of the mechanical refrigeration device in step two. Likewise, the mechanical refrigeration device may be turned off before or within a second pre-set time period after commencement of the cryogenic refrigeration device under step three.

The control system may be programmed to maintain the interior of the entire container to within the first range or may be programmed to maintain each of a number of compartments 10a, 10b, 10c within one of a number of ranges, such as those corresponding loosely to 'frozen', 'chilled' and 'controlled ambient' for example.

If a source of electrical power is available, the electric motor may be powered up to operate the compressor as and when required.

Because the mechanical refrigeration system is only used as a means of maintaining an already established chilling atmosphere, it need not be as large as a conventional arrangement. The reduced size results in a considerable cost saving which goes a long way towards the cost of the additional cryogenic system.

A further advantage of the present arrangement resides in its flexibility, each refrigeration system can be operated to the best of its capabilities and each acts to complement the other without excessive compromise in performance. A particularly useful feature is that of being able to operate just the mechanical refrigeration system to maintain the cryogenically established chilling atmosphere during long road journeys, thereby preserving the supply of cryogenic cooling fluid for use when rapid pull down or silent operation is required.

The control system is normally operated in 'automatic' mode during which the operator need not alter the control parameters unless he so desires. Automatic operation enables the system to switch between modes of operation as and when required without operator intervention, thus increasing the efficiency of operation.

Whilst the actual 'frozen', 'chilled' and 'controlled ambient' temperatures will vary depending upon the product being transported, typical values are -20±1°C, +2±1°C and +15±1°C respectively. A typical first operating temperature would be selected from within these ranges and depends upon the product.

## Claims

1. A refrigeration apparatus comprising a container (10) for receiving items to be maintained under controlled temperature conditions and a temperature control means for generating and controlling said controlled temperature within the container, characterised in that the temperature control means comprises the combination of a mechanical refrigeration device (12) and a cryogenic refrigeration device (14) together with a control system (43) for controlling the operation of each device so as to cause the operation of one or other or both of said devices (12, 14) in accordance with predetermined operating parameters.

2. A refrigeration apparatus as claimed in claim 1 characterised by circulation means (42) for causing the circulation of a mechanical and/or cryogenically refrigerated atmosphere within the container (10).

3. A refrigeration apparatus as claimed in either of the preceding claims characterised by supply control means (43) for controlling the supply of product of the cryogenic and/or mechanical refrigeration devices to different zones (10a, 10b, 10c) within the container (10) thereby to create zones of different temperature therein.

4. A refrigeration apparatus as claimed in any one of the claims 1 to 3 characterised in that said container (10) comprises a road haulable container.

5. A method of operating a refrigeration apparatus as claimed in any one of claims 1 to 4 characterised by the following steps :
(a) operating the cryogenic refrigeration device so as to reduce rapidly the temperature within the container to or within a given range of a first temperature below that of atmospheric and at which it is desired to maintain a product to be placed in the container.
(b) operating the mechanical refrigeration device to maintain the temperature within the container at or within a given range of said first temperature;
(c) operating the cryogenic refrigeration device to initiate a rapid reduction in temperature within the container after the escape of atmosphere therefrom.
(d) repeating steps (b) and (c) as required so as to maintain the temperature within the container within a desired temperature range.

6. A method as claimed in claim 5 including the further step of operating the mechanical refrigeration device during step (c) so as to assist in the reduction of temperature within the container.

7. A method as claimed in claim 5 including the further step of ceasing operation of the cryogenic refrigeration device during step (c) and operating the mechanical refrigeration device once the temperature within the container is within a given range of said first temperature.

8. A method as claimed in any one of the claims 5 to 7 including the step of ceasing the operation of the cryogenic refrigeration device before or within a first pre-set time period after commencement of operation of the mechanical refrigeration device in step (b).

9. A method as claimed in any one of claims 5 to 8 including the step of ceasing the operation of the mechanical refrigeration device under step (b) before or within a second pre-set time period after commencement of operation of the cryogenic refrigeration device under step (c).

10. A method as claimed in any one of claims 5 to 9 including the step of controlling the flow of product from the cryogenic and/or mechanical refrigeration devices to different zones within the container, thereby to create zones of different temperatures.
